# FASCICULE DE BREVET EUROPEEN

(11) **EP 1 234 750 B1**
(45) Date de publication et mention de la délivrance du brevet: **17.05.2006**
(21) Numéro de dépôt: 02290140.9
(22) Date de dépôt: 21.01.2002
(51) Int. Cl.: B62D 25/04

(54) **Structure pour véhicule automobile.**
Aufbau für Kraftfahrzeug
Body structure for automobile

(30) Priorité: 23.02.2001 FR 0102494
(43) Date de publication de la demande: 28.08.2002
(73) Titulaire: Peugeot Citroen Automobiles SA, 92200 Neuilly sur Seine (FR)
(72) Inventeur: Cazes, Marion, 75009 Paris (FR); Cazes, Christophe, 75009 Paris (FR)
(74) Mandataire: Robert, Jean-François

(56) Documents cités:
- EP-A- 1 118 528
- DE-A- 19 519 779
- FR-A- 2 800 699
- US-A- 6 129 410
- US-B1- 6 179 370

## Description

L'invention se rapporte à une structure de véhicule automobile en général et au pied milieu d'une telle structure en particulier.

Pour un constructeur automobile, il est normal d'apporter toujours plus de sécurité à ses véhicules. Ainsi, pour les pieds milieux, l'amélioration de la sécurité consiste en une programmation des déformations et surtout la limitation des intrusions, dues aux déformations, dans l'habitacle. Ainsi l'espace vital des personnes dans l'habitacle doit être constant et les équipements de sûreté, comme la ceinture de sécurité, doivent rester en fonctionnement optimal. De plus, le niveau de sécurité est régulièrement réévalué grâce aux réglementations dictant des normes toujours plus sévères qui interdisent la commercialisation de véhicules non conformes.

Pour satisfaire à ces normes, les constructeurs doivent non seulement améliorer les structures mais également proposer toujours plus d'équipements de sécurité comme les sacs gonflables ou les ceintures de sécurité à prétention pyrotechnique. Malheureusement, ces structures améliorées et ces équipements de sécurité en plus alourdissent le véhicule et compliquent d'autant plus son montage.

Une structure connue est divulguée par le document US-A-6179370, qui couvre les caracteristiques du préambule de la revendication 1.

Le but de la présente invention est de pallier les inconvénients cités ci-dessus en proposant une structure simplifiée, plus légère, répondant aux réglementations et pouvant intégrer les équipements de l'habitacle.

A cet effet, l'invention propose une structure pour véhicule automobile comprenant un élément de carrosserie encadrant au moins deux ouvrants et des moyens de rigidification dudit élément de carrosserie sensiblement dans une zone comprise entre deux ouvrants où lesdits moyens de rigidification comportent un seul moyen de renfort dudit élément de carrosserie, un unique moyen raidisseur venant tapisser le moyen de renfort et un moyen de doublure unitaire coopérant avec les deux premiers moyens de façon à ce qu'ils forment ensemble sensiblement un élément creux caractérisée en ce que ledit moyen de renfort est sensiblement en forme de i majuscule légérement en biais.

La structure entre deux ouvrants selon l'invention se trouve ainsi très simplifiée car elle ne comporte que trois pièces.

Avantageusement, la zone comprise entre deux ouvrants est le pied milieu d'un véhicule d'au moins quatre portes.

De plus, le moyen de renfort est, avantageusement selon l'invention, sensiblement en forme de i majuscule légèrement en biais, ledit moyen s'étendant de l'arc de pavillon jusqu'au longeron dudit véhicule automobile et présentant un creux sensiblement le long de son axe vertical. Ce moyen de renfort monobloc permet donc de bien suivre et rigidifier le pied milieu de la carrosserie du véhicule.

De manière avantageuse, le moyen raidisseur, selon l'invention, est une simple plaque de section sensiblement en U d'un matériau à très haute limite élastique pouvant coopérer avec ledit creux du moyen de renfort et étant d'une longueur inférieure à ce dernier ce qui permet de répondre aux caractéristiques mécaniques désirées à l'aide d'une seule pièce très facile à fabriquer.

Le moyen de doublure est, avantageusement selon l'invention, une plaque sensiblement plane venant coopérer avec des bordures s'étendant le long dudit creux du moyen de renfort de manière à couvrir ledit creux, la longueur dudit moyen de doublure étant inférieure à celle du moyen raidisseur. Ce moyen de doublure est également très simple de conception et constitue le dernier moyen de rigidification d'un pied milieu selon l'invention.

Avantageusement selon l'invention, le moyen raidisseur est placé par rapport au moyen de renfort de manière à créer une zone de faiblesse le long de l'axe vertical de ladite structure, en dessous dudit moyen raidisseur, permettant de programmer les déformations de la carrosserie dudit véhicule lors de chocs latéraux. En effet, la partie du moyen de renfort non tapissée par le moyen raidisseur va avoir, par rapport à celle tapissée, des caractéristiques mécaniques inférieures qui aura pour conséquence de la déformer prioritairement en cas de choc.

De manière avantageuse, la structure, selon l'invention, permet le montage des équipements du pied milieu sans moyens supplémentaires. En effet, les caractéristiques mécaniques de la structure permettent de s'affranchir d'éventuels renforts de charnières d'ouvrants arrières ou de gâche d'ouvrant avant réduisant ainsi la masse de la structure.

Enfin selon l'invention, la structure comporte, avantageusement, un moyen raidisseur d'une épaisseur de sensiblement 1,5 millimètres et desdits moyens de renfort et de doublure d'épaisseur respective inférieure au millimètre.

D'autres particularités et avantages apparaîtront à la lecture de la description ci-après faite en référence aux figures dans lesquelles :
- la figure 1 représente une vue en perspective tronquée de la structure selon l'invention ;
- la figure 2 est une vue de face des moyens de rigidification de la structure selon l'invention ;
- la figure 3 est une vue de face, selon l'invention, du moyen raidisseur ;
- la figure 4 est une vue de face, selon l'invention, du moyen de renfort de l'élément de carrosserie ;
- la figure 5 est une vue en coupe des moyens de rigidification, selon l'invention, selon l'axe A-A illustré à la figure 2 ;
- la figure 6 est une vue en coupe des moyens de rigidification, selon l'invention, selon l'axe B-B illustré à la figure 2 ;
- la figure 7 est une vue en coupe des moyens de rigidification, selon l'invention, selon l'axe C-C illustré à la figure 2 ;
- la figure 8 est une vue en coupe des moyens de rigidification, selon l'invention, selon l'axe D-D illustré à la figure 2.

L'invention se rapporte à une structure pour véhicule automobile venant coopérer avec un élément de carrosserie (non représenté) comprenant un pied milieu de manière à offrir une rigidité générale améliorée et une capacité à absorber les chocs permettant la sécurité des occupants dudit véhicule.

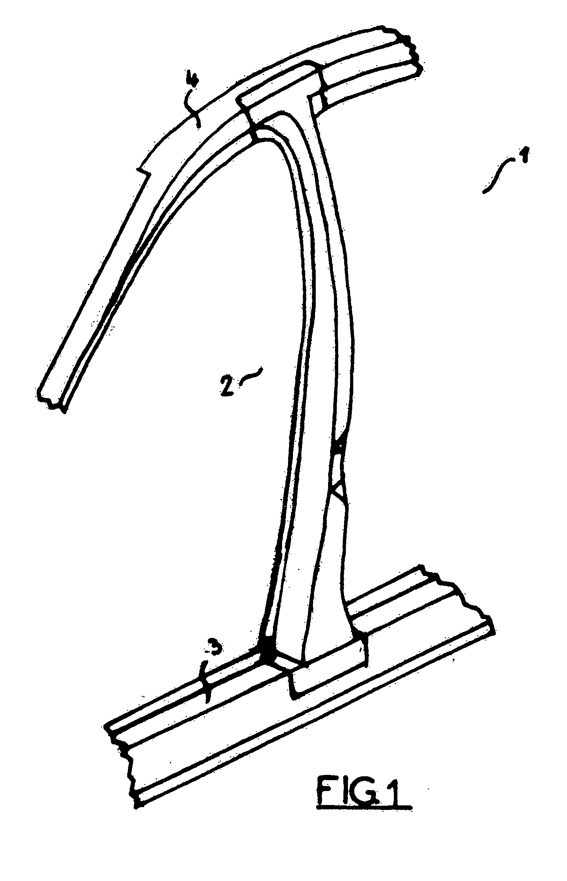

Comme illustrée à la figure 1, la structure (1) selon l'invention comporte des moyens de rigidification (2) non apparents pour le conducteur dudit véhicule qui viennent améliorer les caractéristiques du pilier central (ou pied milieu) de la carrosserie (non représentée) qui, elle, est apparente pour ledit conducteur. Ainsi les moyens de rigidifications s'étendent sensiblement verticalement entre le longeron (3) situé à hauteur des bas de caisse et l'arc de pavillon (4) constituant la hauteur maximale du véhicule.

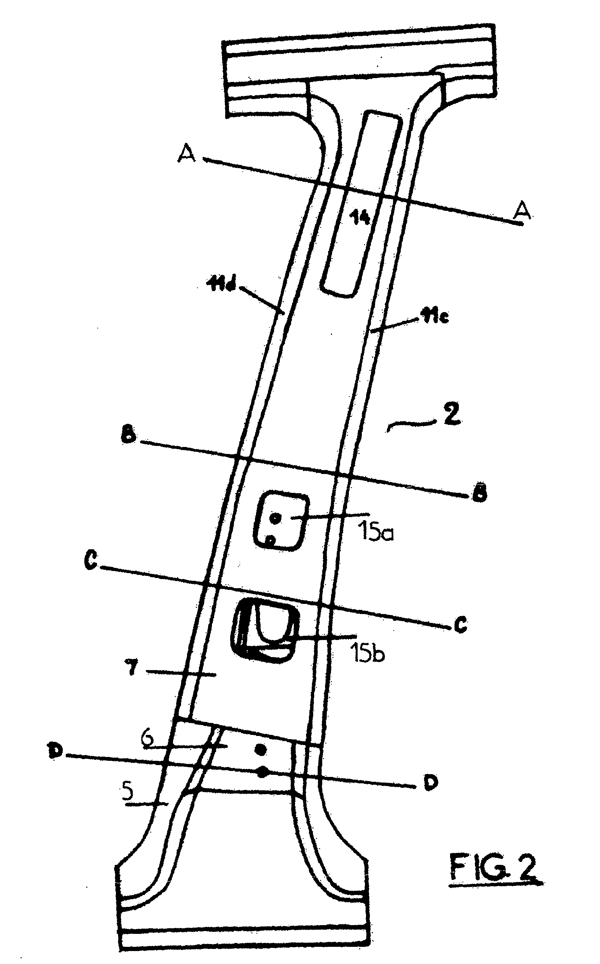

On peut dans la figure 2 que lesdits moyens de rigidifications (2) comportent un moyen de renfort (5), un moyen raidisseur (6) et un moyen de doublure (7).

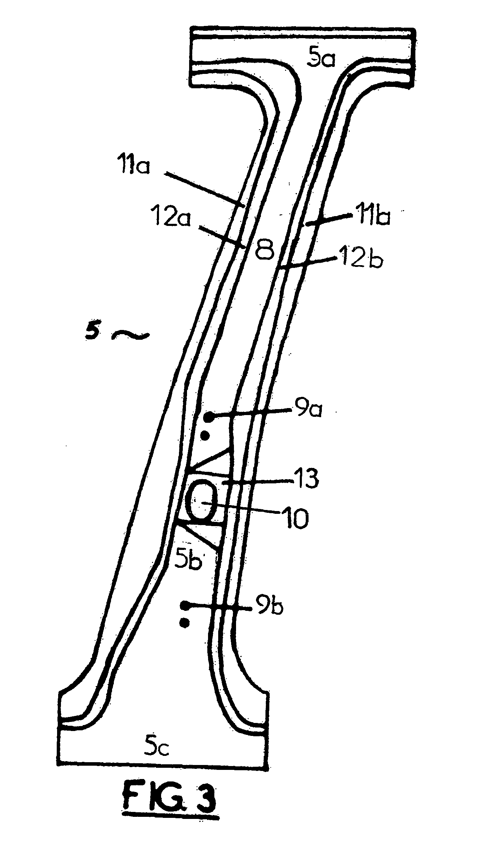

Comme illustré à la figure 3, ledit moyen de renfort, qui est une seule pièce de métal de constitution simple, supporte l'ensemble des moyens de rigidification (2) et fait le lien dans sa partie haute (5a) au longeron (3) et dans sa partie basse (5c) l'arc de pavillon (4). Sensiblement autour de l'axe vertical du moyen de renfort (5) court un creux (8) qui dans la région (5b) dudit moyen de renfort comporte des moyens de montage d'équipement du pied milieu comme les charnières de portes arrières dans les trous (9a, 9b) ou la gâche de porte avant dans le trou (10). Le long du creux (8) s'étend de chaque côté des bordures (11a, 11b), le creux (8) et les bordures (11a, 11b) étant liés de chaque côté par deux pentes (12a, 12b). Enfin, dans la zone (5b) du creux (8) autour du trou (10) est réalisé un méplat (13) pour que la gâche (non représentée) soit sensiblement oblique par rapport à la surface verticale du creux (8). Le moyen de renfort (5) peut également supporter des équipements tels que l'ancrage de l'enrouleur de la ceinture de sécurité ou bien la glissière qui est le deuxième point de la ceinture de sécurité dans sa partie haute. Il est enfin à noter que l'épaisseur dudit moyen de renfort n'excède pas le millimètre gage d'allègement de la structure (1).

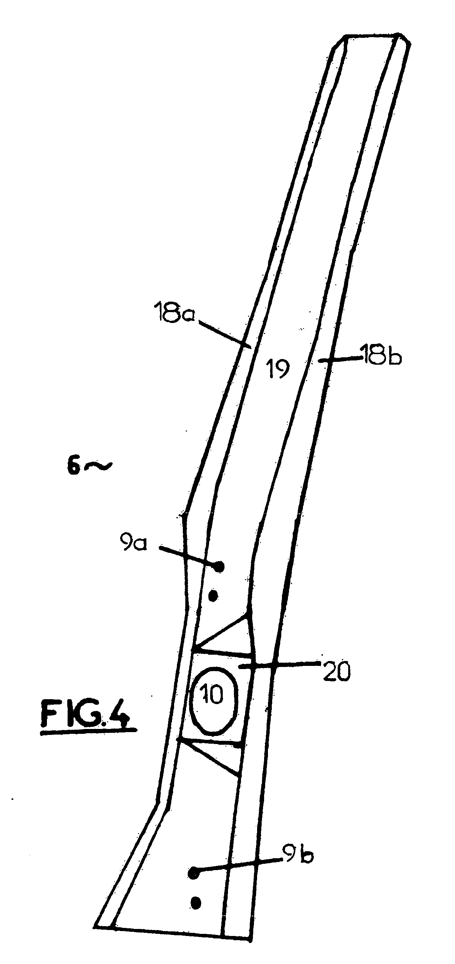

Comme illustré à la figure 4, le moyen raidisseur (6), simple tôle emboutie dont la section est sensiblement en U, est selon l'invention apte à tapisser le creux (8) du moyen de renfort (5). Ainsi, aux pentes (12a, 12b) du moyen renfort correspondent les pentes (18a, 18b) du moyen raidisseur (6), au creux (8), la surface (19) et au méplat (13), son méplat associé (20). Ledit moyen raidisseur fait appel aux métaux dits à très haute limite élastique c'est-à-dire dont la limite élastique est supérieure à 1000 MPa. Cela permet une capacité à l'étirement améliorée avant déformation définitive par rapport aux tôles sans traitements. Dans le cas de l'invention, le but est de rendre conforme les caractéristiques de déformation du véhicule lors de chocs par rapport aux réglementations. Ainsi à l'aide de ce moyen raidisseur (6), d'une épaisseur d'environ 1,5 millimètres, contre le moyen de renfort (5) la déformation est contenue pour éviter les intrusions intempestives du pied milieu dans la zone vitale du conducteur lors d'un choc. Il est enfin à noter, comme le montre la figure 2, que le moyen raidisseur (6) ne couvre pas entièrement le creux (8) du moyen de renfort (5).

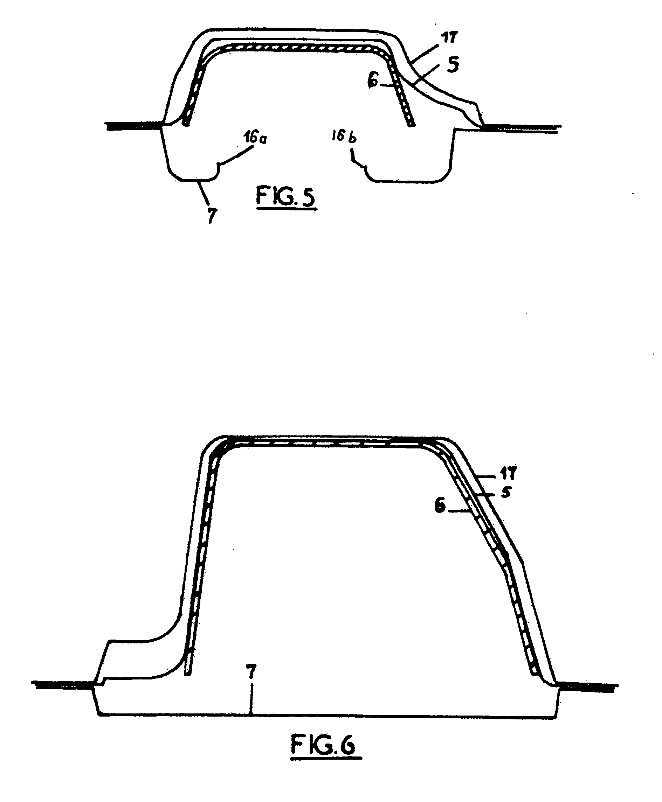

Comme illustré à la figure 2, le moyen de doublure (7), qui est de constitution simple, se solidarise au moyen de renfort (5) en faisant correspondre ses bordures (11c, 11d) aux bordures (11a, 11b) dudit moyen de renfort. Les moyens de rigidification ainsi montés formant un ensemble creux. En outre, il contient trois évidements (14, 15a, 15b). Le premier évidemment (14), de forme allongée, est destiné à correspondre avec une glissière (non représentée) servant de deuxième point de fixation à une ceinture de sécurité. Sur la section de la structure (1) représentée à la figure 5, on peut voir que l'évidemment (14) du moyen de doublure (7) possède des bords (16a, 16b) pliés vers le creux (8) du moyen de renfort (5). Les deux autres évidemment (15a, 15b), de forme sensiblement carrée, servent eux au montage des portes avant et arrière mais aussi permettent de gagner du poids. En effet, l'évidemment (15a) permet de visualiser les trous (9a) et ainsi de pouvoir monter une des deux charnières de la porte arrière (non représentée). Pour le même fonction, le trou (15b) permet la mise en place de la gâche pour la portière avant (non représentée) du véhicule. Enfin, le moyen de doublure (7) possède une épaisseur lui aussi inférieure au millimètre participant ainsi à l'allègement de la structure (1).

On peut remarquer dans l'exemple illustré à la figure 2 que ledit moyen de doublure (7) est d'une longueur inférieure au moyen raidisseur (6) lui même inférieur au moyen de renfort (5). Cette disposition avantageuse des moyens de rigidification (2) permet de disposer d'une zone de faiblesse propre à se déformer prioritairement. Cette zone est située en dessous dudit moyen raidisseur (6). Ainsi, les moyens de rigidification (2) permettent au pied milieu :
- de résister en partie supérieure (5a) pour protéger la tête des passagers ;
- de pouvoir se déformer entre l'arc de pavillon (4) et le longeron (3), cette déformation étant privilégiée au niveau du bassin des passagers, partie la plus résistante du corps humain ;
- d'avoir une partie basse (5c) rigide limitant les mouvement du siège ;
- de globalement limiter ses intrusions dans l'habitacle ;
- de supporter les charnières de la porte arrière et la gâche de porte avant sans ajout de support de rigidification supplémentaire ;
- d'ancrer les ceintures de sécurité en partie supérieure (5a) ;
- de participer à la rigidité et à l'allègement de l'ensemble de la caisse.

Dans les figures 5 à 8, on peut voir quatre coupes de la structure (1) selon l'invention à différentes hauteurs. Dans les trois premières sections (fig. 5, 6 et 7), on retrouve toujours l'élément de carrosserie (17), le moyen de renfort (5), le moyen raidisseur (6) et le moyen de doublure (7). Enfin, sur la coupe de la structure (1) illustrée à la figure 8, le moyen de doublure (7) plus.

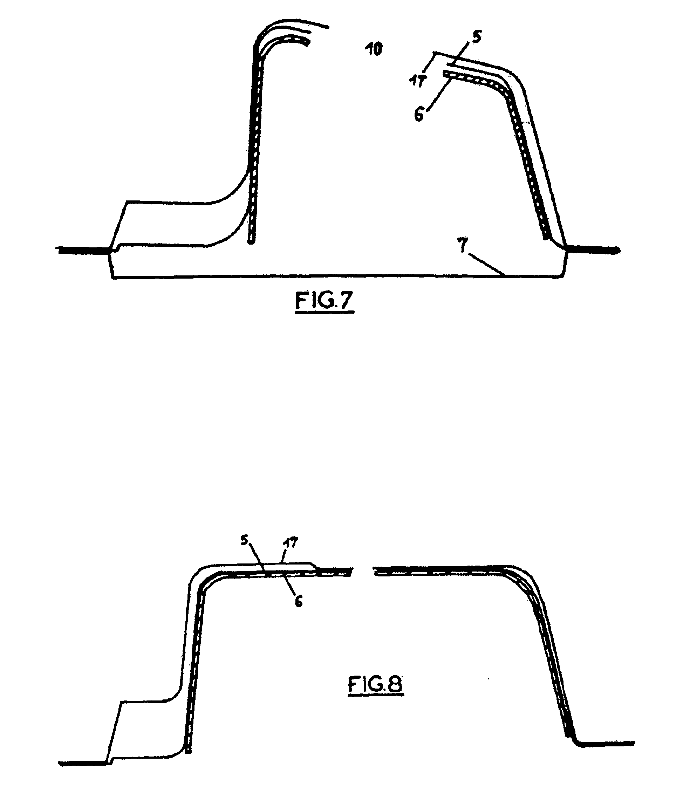

On s'aperçoit au travers de ces différentes figures que la section du pied milieu s'évase en largeur et en longueur au fur et à mesure que l'on se rapproche du longeron (3). Cependant, la section du moyen raidisseur (6) reste toujours sensiblement en U au fur et à mesure de l'évasement. Les seules ruptures illustrées aux figures 7 et 8 formant respectivement le trou (10) pour le montage de la gâche de la porte avant et le trou (9b) pour le montage de l'une des deux charnières de la porte arrière.

Bien entendu, cette invention ne se limite pas aux structures de pied milieu, mais peut s'appliquer à une structure en général nécessitant une rigidification, un allègement ou une déformation programmée. De la même façon, les sections des moyens de rigidification (2) selon l'invention ne sauraient se limiter à celles divulguées dans le présent brevet.

## Revendications

1. Structure (1) pour véhicule automobile comprenant un élément de carrosserie (17) encadrant au moins deux ouvrants et des moyens de rigidification (2) dudit élément de carrosserie sensiblement dans une zone comprise entre deux ouvrants, lesdits moyens de rigidification comportant un seul moyen de renfort (5) dudit élément de carrosserie, un unique moyen raidisseur (6) venant tapisser le moyen de renfort (5) et un moyen de doublure (7) unitaire coopérant avec les deux premiers moyens (5, 6) de façon à ce qu'ils forment ensemble sensiblement un ensemble creux **caractérisé en ce que** ledit moyen de renfort est sensiblement en forme de i majuscule légèrement en biais.

2. Structure (1) selon la revendication 1, **caractérisée en ce que** ladite zone comprise entre deux ouvrants est le pied milieu d'un véhicule d'au moins quatre portes.

3. Structure (1) selon la revendication 2, **caractérisée en ce que** le moyen de renfort (5) s'étend de l'arc de pavillon (4) jusqu'au longeron (3) dudit véhicule automobile et présentant un creux (8) sensiblement le long de son axe vertical.

4. Structure (1) selon la revendication 3, **caractérisée en ce que** le moyen raidisseur (6) est une simple plaque de section sensiblement en U d'un matériau à haute limite élastique pouvant coopérer avec ledit creux du moyen de renfort (5) et étant d'une longueur inférieure à ce dernier.

5. Structure (1) selon la revendication 4, **caractérisée en ce que** le moyen de doublure (7) est une plaque sensiblement plane venant coopérer avec des bordures (11a, 11b) s'étendant le long dudit creux du moyen de renfort (5) de manière à couvrir le creux (8), la longueur dudit moyen de doublure étant inférieure à celle du moyen raidisseur (6).

6. Structure (1) selon la revendication 4 ou 5, **caractérisée en ce que** le moyen raidisseur (6) est placé par rapport au moyen de renfort (5) de manière à créer une zone de faiblesse le long de l'axe vertical de ladite structure, en dessous dudit moyen raidisseur, permettant de programmer les déformations du pied milieu dudit véhicule lors de chocs latéraux.

7. Structure (1) selon la revendication 5 ou 6, **caractérisée en ce qu'**elle permet le montage des équipements du pied milieu sans moyens supplémentaires.

8. Structure (1) selon une des revendications de 5 à 7, **caractérisée en ce qu'**elle comporte un moyen raidisseur (6) d'une épaisseur de sensiblement 1,5 millimètres et desdits moyens de renfort et de doublure d'épaisseur respective inférieure au millimètre.

## Claims

1. Structure (1) for a motor vehicle comprising a body member (17) framing at least two opening leaves and means (2) for rigidifying said body member substantially in a zone comprised between two opening leaves, said rigidification means comprising just one means (5) for reinforcing said body member, a single stiffening means (6) covering the reinforcement means (5) and a unitary lining means (7) co-operating with the first two means (5, 6) so that, together, they form substantially a hollow assembly **characterised in that** said reinforcement means is substantially in the shape of a capital i at a slight angle.

2. Structure (1) according to Claim 1, **characterised in that** said zone comprised between two opening leaves is the centre pillar of a vehicle with at least four doors.

3. Structure (1) according to Claim 2, **characterised in that** the reinforcement means (5) extends from the roof rail (4) to the side member (3) of said motor vehicle and having a cavity (8) substantially along its vertical axis.

4. Structure (1) according to Claim 3, **characterised in that** the stiffening means (6) is a simple plate with substantially U-shaped section made of a material with a high elastic limit capable of co-operating with said cavity in the reinforcement means (5) and being shorter than the latter.

5. Structure (1) according to Claim 4, **characterised in that** the lining means (7) is a substantially plane plate co-operating with edges (11a, 11b) extending along said cavity in the reinforcement means (5) so as to cover the cavity (8), the length of said lining means being less than that of the stiffening means (6).

6. Structure (1) according to Claim 4 or 5, **characterised in that** the stiffening means (6) is placed relative to the reinforcement means (5) so as to create a zone of weakness along the vertical axis of said structure, below said stiffening means, making it possible to programme the deformations of the centre pillar of said vehicle at the time of a side impact.

7. Structure (1) according to Claim 5 or 6, **characterised in that** it allows equipment to be mounted on the centre pillar without any additional means.

8. Structure (1) according to one of Claims 5 to 7, **characterised in that** it comprises a stiffening means (6) with a thickness of substantially 1.5 millimetres and of said reinforcement and lining means respectively with a thickness of less than a millimetre.

## Patentansprüche

1. Aufbau (1) für ein Kraftfahrzeug mit einem Karosserieelement (17), das mindestens zwei Flügel einrahmt, und mit Mitteln (2) zum Versteifen des Karosserieelements im Wesentlichen in einem Bereich zwischen zwei Flügeln, wobei die Versteifungsmittel nur ein Mittel (5) zur Verstärkung des Karosserieelements, ein einziges versteifendes Mittel (6), welches das Verstärkungsmittel (5) bedeckt, und ein Mittel (7) zum einheitlichen Verkleiden umfassen, das mit den beiden ersten Mitteln (5, 6) derart zusammenwirkt, dass sie zusammen im Wesentlichen eine hohle Einheit bilden, **dadurch gekennzeichnet, dass** das Verstärkungsmittel im Wesentlichen die Form eines leicht schiefen großen I besitzt.

2. Aufbau (1) nach Anspruch 1, **dadurch gekennzeichnet, dass** der Bereich zwischen zwei Flügeln die mittlere Säule eines Fahrzeugs mit mindestens vier Türen ist.

3. Aufbau (1) nach Anspruch 2, **dadurch gekennzeichnet, dass** sich das Verstärkungsmittel (5) vom Dachbogen (4) bis zum Längsträger (3) des Kraftfahrzeugs erstreckt und eine Aushöhlung (8) im Wesentlichen entlang seiner vertikalen Achse aufweist.

4. Aufbau (1) nach Anspruch 3, **dadurch gekennzeichnet, dass** das Versteifungsmittel (6) eine einfache Platte von im Wesentlichen U-fömigem Querschnitt aus einem Material mit hoher Elastizitätsgrenze ist, die mit der Aushöhlung des Verstärkungsmittels (5) zusammenwirken kann und kürzer ist als dieses.

5. Aufbau (1) nach Anspruch 4, **dadurch gekennzeichnet, dass** das Verkleidungsmittel (7) eine im Wesentlichen flache Platte ist, die mit den Rändern (11a, 11b) zusammenwirkt, welche sich entlang der Aushöhlung des Verstärkungsmittels (5) erstrecken, sodass die Aushöhlung (8) bedeckt ist, wobei das Verkleidungsmittel kürzer ist als das Versteifungsmittel (6).

6. Aufbau (1) nach Anspruch 4 oder 5, **dadurch gekennzeichnet, dass** das Versteifungsmittel (6) in Bezug auf das Verstärkungsmittel (5) derart angeordnet ist, dass ein Schwächebereich entlang der vertikalen Achse des Aufbaus unterhalb des Versteifungsmittels geschaffen wird, der es ermöglicht, die Verformungen der mittleren Säule des Fahrzeugs bei seitlichen Stößen zu programmieren.

7. Aufbau (1) nach Anspruch 5 oder 6, **dadurch gekennzeichnet, dass** er die Montage von Zubehör der mittleren Säule ohne zusätzliche Mittel erlaubt.

8. Aufbau (1) nach einem der Ansprüche 5 bis 7, **dadurch gekennzeichnet, dass** er ein Versteifungsmittel (6) mit einer Dicke von im Wesentlichen 1,5 Millimeter sowie Verstärkungs- und Verkleidungsmittel mit einer Dicke von weniger als einem Millimeter aufweist.
